# FASCICULE DE BREVET EUROPEEN

(11) **EP 1 195 362 B1**
(45) Date de publication et mention de la délivrance du brevet: **13.04.2005**
(21) Numéro de dépôt: 01402408.7
(22) Date de dépôt: 19.09.2001
(51) Int. Cl.: C04B 16/04, C04B 28/02, E21B 33/13

(54) **Laitiers de ciment alléges**
Leichte Zementschlämme
Lightweight cement slurries

(30) Priorité: 09.10.2000 FR 0012960
(43) Date de publication de la demande: 10.04.2002
(73) Titulaire: Institut Français du Pétrole, 92852 Rueil Malmaison Cédex (FR)
(72) Inventeur: Audibert, Annie, 78290 Croissy sur Seine (FR); Noik, Christine, 78230 Le Pecq (FR); Rivereau, Alain, 92500 Rueil Malmaison (FR)

(56) Documents cités:
- EP-A- 0 544 569
- EP-A- 0 565 987
- EP-A- 0 590 983
- EP-A- 0 681 017
- EP-A- 0 936 228
- EP-A- 0 983 976
- WO-A-99/23046

## Description

La présente invention concerne notamment des opérations menées dans le but d'exploiter des gisements souterrains contenant des hydrocarbures. Les cimentations nécessitent généralement l'injection par pompage d'un laitier de ciment en circulant à travers des tubes depuis la surface du sol. Le but est de cimenter l'espace annulaire défini entre l'extérieur du tube de cuvelage et le trou foré.

Les laitiers de ciment classiques présentent en général une masse volumique supérieure à 1800 kg/m³. Pour des opérations spécifiques telles que les forages par grands fonds marins, il est nécessaire de concevoir des coulis de faible masse volumique, tout en présentant de hautes performances. La méthode la plus classique pour alléger le laitier est d'augmenter le rapport eau/ciment (noté E/C, en poids, dans la suite du document) mais ceci se fait au détriment des propriétés mécaniques du matériau une fois solidifié. La masse volumique minimale d'un laitier qui peut être atteinte par augmentation du rapport E/C, sans perte de cohésion de la matrice cimentaire est comprise selon les auteurs, entre 1260 kg/m³ et 1450 kg/m³. Une autre voie pour alléger les coulis de ciment est d'ajouter des matériaux de faible densité à une formulation de laitier classique, telles que poudre de charbon, gilsonite, coquilles de noix,....

Le document US-5252128 décrit un mélange de ciment, de résine styrène/ butadiène, et de tensioactif alkyl phénol, contenant de 5 à 30% en poids de résine par rapport au ciment qui permet un bon contrôle des propriétés de filtration du laitier.

Le document US-4721160 décrit un mélange de ciment et de résine styrène /butadiène contenant une très forte proportion d'eau (70%) pour obtention d'un ciment allégé de densité compris entre 1,2 et 1,6.

Il a aussi été montré qu'une optimisation des tailles granulométriques de différents constituants permettait l'obtention de mélanges d'une large gamme de densité.

Le brevet WO-99/23046 décrit l'obtention d'un ciment pétrolier de très faible perméabilité et grande résistance mécanique à base de ciment, silice et micro silice. Les laitiers ainsi obtenus présentent une masse volumique d'environ 2,3.

L'objectif de la présente invention est d'associer à des particules de ciment , une résine (VASA) obtenue par polymérisation à partir de monomères de types vinyl aromatique, alkyle acrylate, acrylique, plus ou moins réticulée, de masse volumique 1,03, de granulométrie inférieure à 100 µm (80% des particules étant comprise entre 0,1 et 100 µm).

Cette résine VASA est organosoluble, c'est-à-dire que les particules ne se solubilisent pas dans l'eau du laitier, mais restent sous la forme d'une dispersion mélangée avec les autres particules. La résine VASA est caractérisée notamment par :
- une température de transition vitreuse supérieure à 55°C,
- lorsque la résine est en solution dans du xylène à 10 %, cette solution présente une viscosité Brookfield supérieure à 80 Pa.s.

Selon l'invention, la résine VASA joue le rôle d'une charge particulaire inerte chimiquement vis-à-vis des autres constituants du laitier : liants, additifs, charges, eau.

De préférence, il peut s'agir d'une résine du type « Pliolite » (TM) fabriquée par Good Year. Cette résine a été utilisée dans les exemples ci-après.

De préférence, on associe également au moins un dérivé de polymère dispersant ou, en particulier, un additif polymère dispersant de type hydrophile/hydrophobe. Ceci permet non seulement un allégement du mélange mais aussi une parfaite dispersion des particules organophiles dans les autres particules, ainsi qu'un bon contrôle de la rhéologie du mélange.

Le polymère dispersant peut être un polymère à motifs hydrophiles (Hy) et hydrophobes (Hb) en solution aqueuse, les motifs hydrophobes (Hb) contenant des groupement alkyles, aryles, alkyl-aryle C1 à C30, le polymère ayant la structure suivante : ―(Hb)―(Hy)―avec une répartition statistique avec :
- Hy est de la forme : 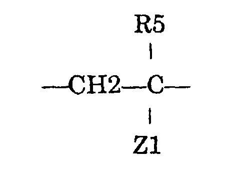 où R5 est H ou CH3, et Z1 est COOH ou CONH2 ou CONHR1SO3⁻ ou CONHR"1, R"1 est CH3 ;
- Hb est de la forme 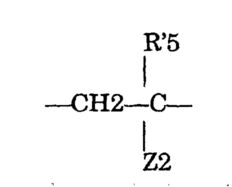
où R'5 est H ou CH3 et Z2 est COOR7, C6H4SO3H, COOR'1, CONR1R'1 ou CONR1R7, R7 étant un tensioactif non ionique constitué d'une chaîne polyoxyéthylènique d'alkyle, R1 est H ou un radical alkyle, aryle ou alkyl-aryle de C1-C30, et R'1 est un radical alkyle, aryle ou alkyl-aryle de C1-C30.

Selon une variante, le polymère peut avoir une masse moléculaire comprise entre 10⁴ et 5 10⁶ daltons et un taux de motifs hydrophobes Hb compris entre 0,5 et 60%.

Le polymère dispersant peut être choisi dans le groupe constitué par :
- HMPAM: où R5 est H et Z1 est CONH2, R'5=CH3, Z2 est COOR'1 avec R'1=C9H19,
- S1: où R5 est H et Z1 est CONH2, R'5=H et Z2 est C6H4SO3H,
- HB1 : où R5 est H, Z1 est COOH, R'5 est H et Z2 est COOR'1 avec R'1 en C4.

En particulier, le polymère dénommé HMPAM peut avoir une masse moléculaire comprise entre 5 10⁵ et 2 10⁶ daltons et un taux d'hydrophobe (Hb) compris entre 0,5 et 3%.

Le polymère S1, copolymère acrylamide (Hy)/styrène sulfonate (Hb) ramifié ou non, selon la description ci-dessus peut avoir un rapport molaire d'environ 50/50 et une masse molaire comprise entre 5 10⁵ et 5 10⁶ daltons. Dans le cas où il est ramifié, il sera dénommé S2. Le ramifiant utilisé dans ce cas peut être le N, N' méthylène bis acrylamide MBA.

Le polymère HB1, copolymère acrylate (Hy)/butyl acrylate (Hb), avec R5 est H, Z1 est COOH, R'5 est H et Z2 est COOR'1 avec R'1 en C4, peut comprendre environ 80% de motifs acrylates, et avoir une masse moléculaire comprise entre 10⁴ et 5 10⁴ daltons.

Le laitier selon l'invention peut avoir la composition suivante : entre 10 et 20% de silice, entre 10 et 15% de micro silice, entre 30 et 60% de résine VASA, entre 0,5 et 5% de polymère hydrophobe, entre 30 et 50% d'eau, les pourcentages étant exprimés par rapport au poids de ciment.

De préférence, le laitier peut avoir environ 15% de silice, 12% de micro silice, 50% de résine VASA, entre 1 et 3% de polymère hydrophobe, entre 40 et 45% d'eau.

Dans une variante, le laitier peut avoir la composition suivante :entre 10 et 20% de silice, entre 10 et 15% de micro silice, entre 30 et 60% de résine VASA, entre 80 et 95% d'eau, et ne pas contenir de polymère dispersant.

La présente invention sera mieux comprise à la lecture des exemples suivants, nullement limitatifs, illustrés par les figures ci-après annexées, parmi lesquelles :

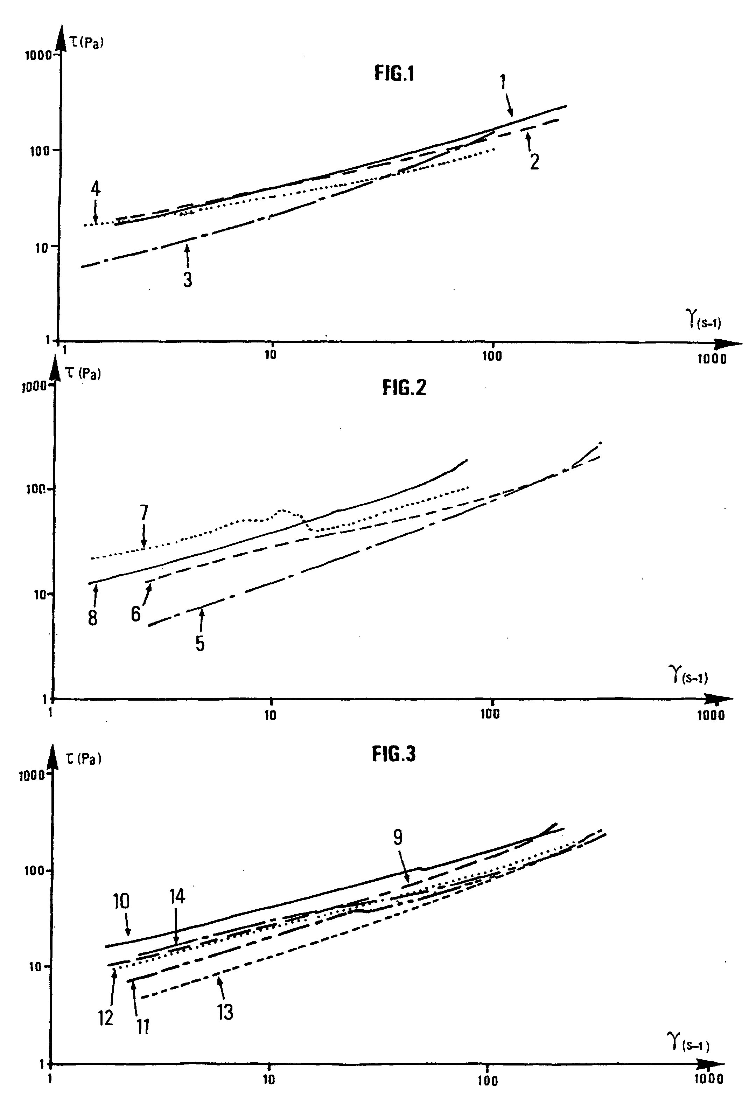

- Les figures 1, 2, 3 donnent les courbes rhéologiques de différentes formulations de laitiers de ciment allégés.

Dans les essais suivants, les charges solides sont mélangées à sec; les additifs liquides sont préparés en solution aqueuse et le mélange des deux est homogénéisé au malaxeur quelques minutes à basse vitesse puis à forte vitesse pendant 35 secondes. Selon les mélanges, ceux-ci peuvent être homogénéisés à petite vitesse pendant environ 20 minutes.

Le temps de pompabilité est défini comme le temps nécessaire pour la mise en place par circulation d'un laitier de ciment dans un puits. Le temps de pompabilité doit être au minimum de deux heures.

Les courbes contrainte τ - cisaillement γ sont obtenues à une température T (°C).

La résistance à la compression est mesurée à une température T (°C) sur des échantillons vieillis à une température donnée (°C) pendant un certain nombre de jours.

Le volume filtré, donné en millilitre, est mesuré selon les normes API (American Petroleum Institute). Les normes en vigueur sont API SPEC 10-88, Section 5 (préparation du laitier), Section 9 (Mesure au consistomètre), Appendix F- Filtration.

### Additifs utilisés :

CFR 3 : additif dispersant de la Société Halliburton ;
HR 15 : ligno sulfonate modifié (additif retardateur de prise de la Société Halliburton) ;
Disal : polynaphtalène sulfonate, (additif dispersant de la Société Handy Chemicals) ;
HB1 : additif dispersant du type copolymère hydrophile/hydrophobe.

Les charges minérales associées peuvent être la silice C4 (de la Société Sifraco) de granulométrie comprise entre 5 et 200 pm (D50 environ 33 µm), de la silice MST (micro silice) de granulométrie comprise entre 1 et 50 µm (D50 - 7 µm).

Une résine utilisée peut être une résine de type vinyl acrylate, styrène acrylate, plus ou moins réticulée de masse volumique 1,03, de granulométrie inférieure à 100 µm. Elle est utilisée sous forme de particules sphériques réticulées et est obtenue, par polymérisation en émulsion de monomères de type vinyl aromatique, alkyl acrylate, acrylique, avec éventuellement l'ajout de monomère di fonctionnel qui joue le rôle d'agent de réticulation.

| | |
|---|---|
| Laitier 1 | 100 g de ciment classe G, |
| | 20 g de silice C4, |
| | 24 g de fumée de silice MST |
| | 1,75 g de Disal |
| | 30 ml d'eau déminéralisée |
| | densité= 2,17 |
| | E/C = 0,27 |

### Filtration HP/HT à 90°C du laitier 1 :

| | | | | |
|---|---|---|---|---|
| Concentration en HB1 (%) | 1 | 3 | 4 | 5 |
| Volume HP/HT filtré (ml) en 30' | 35 | 22 | 5 | <3 |

### Temps de prise à 80°C et 500 bars

| | | |
|---|---|---|
| Concentration en HB1 (%) | 0 | 4 |
| T en h | 3h26 min | 90 min |

Le Laitier 1 présente une densité classique (d = 2,17), l'addition du copolymère hydrophile/hydrophobe HB1 permet d'améliorer la dispersion du mélange et de réduire le volume filtré.

On prend la base de ce laitier 1 en ajoutant une certaine proportion de résine VASA avec un minimum d'eau, de façon à obtenir la densité la plus faible.

| | |
|---|---|
| Laitier 2 | 100 g de ciment classe G, |
| | 15 g de silice C4, |
| | 12 g de fumée de silice MST |
| | 50 g de résine VASA |
| | x g de Disal |
| | y g de HB1 |
| | 42,5 cc d'eau déminéralisée |

d = 1,56
E/C = 0,43

x et y sont les poids de la matière active.

Les figure 1, 2 et 3 montrent les courbes rhéologiques des laitiers 2 selon différentes conditions de température et de compositions (x et y).

### Figure 1:

| **Courbes** | **Température** **(°C)** | **x** **(g)** | **y** **(g)** |
|---|---|---|---|
| 1 | 20 | 1,8 | 0 |
| 2 | 40 | 1,8 | 0 |
| 3 | 20 | 2,4 | 0 |
| 4 | 40 | 2,4 | 0 |

Ces courbes rhéologiques montrent que ces compositions ont des rhéologies trop fortes pour un laitier de ciment, notamment pour les faibles cisaillements.

### Figure 2 :

| **Courbes** | **Température** **(°C)** | **x** **(g)** | **y** **(g)** |
|---|---|---|---|
| 5 | 20 | | 3 |
| 6 | 40 | | 3 |
| 7 | 20 | 1,8 | 3 |
| 8 | 40 | 1,8 | 3 |

On note que l'ajout d'une quantité de HB1 dans la formulation du laitier 2, permet d'obtenir une rhéologie acceptable pour un laitier de ciment.

### Figure 3 :

| **Courbes** | **Température** **(°C)** | **x** **(g)** | **y** **(g)** |
|---|---|---|---|
| 9 | 20 | 0 | 1 |
| 10 | 40 | 0 | 1 |
| 11 | 20 | 0 | 2 |
| 12 | 40 | 0 | 2 |
| 13 | 20 | 0 | 3 |
| 14 | 40 | 0 | 3 |

L'utilisation du HB1 permet d'optimiser la rhéologie du mélange et de répondre ainsi aux spécifications. L'optimum des propriétés est obtenu pour environ 3 % de HB1.

### Résistance à la compression (bar) du laitier 2, sans DISAL (x=0) :

| | | | |
|---|---|---|---|
| HB1 (g) | 1 g | 2 g | 3 g |
| 1 semaine | - | - | 110 |
| 6 semaines | 477 | 361 | 251 |
| (à température ambiante) | | | |

### Filtration HP/HT 90°C :

| | |
|---|---|
| Volume HP/HT filtré en 30 minutes | 3,5 ml. |

Comparativement, un mélange classique à base de ciment classe G et de micro silice, à forte teneur en eau (E/C= 0,94) présente dans les mêmes conditions, une résistance à la compression de 65 bar, un volume filtré de 25 ml en 30 minutes, mais surtout un volume d'eau libre de 1,5% indiquant un risque important de sédimentation.

Egalement, un mélange de ciment classe G et de bentonite à forte teneur en eau ((E/C= 0,94) présente une faible résistance à compression (de l'ordre de 30 bars) mesurée dans les mêmes conditions.

| | |
|---|---|
| Laitier 3 | 100 g de ciment classe G, |
| | 15 g de silice C4, |
| | 10 g de fumée de silice MST |
| | 50 g de résine VASA |
| | 0 g de Disal |
| | 90 ml d'eau déminéralisée |
| | d = 1,47 |
| | E/C =0,9 |

Ce laitier contient une plus forte proportion d'eau et est exempt de dispersant. Cependant, il ne sédimente pas grâce à la nature des particules, mais le ciment une fois durci présente une résistance à la compression de 42 bars au bout de 2 jours à 20°C, ce qui est relativement faible.

| | |
|---|---|
| Laitier 4 | 100 g de ciment classe G, |
| | 15 g de silice C4, |
| | 10 g de fumée de silice MST |
| | 50 g de résine VASA |
| | 1,8 g de Disal |
| | 90 ml d'eau déminéralisée |
| | d=1,48 |
| | E/C= 0,9 |

Ce mélange décante quasi immédiatement. Le dispersant de type Disal, est incompatible avec une telle formulation.

On montre ainsi par ces différents essais que l'utilisation conjointe de résine et de produit dispersant dans des proportions adaptées permet l'obtention de laitiers de ciment de faible teneur en eau, qui ne sédimentent pas et qui présentent une fois durci une résistance à la compression satisfaisante.

## Revendications

1. Laitier de ciment allégé, **caractérisé en ce qu'**il comporte : du ciment, au moins une charge minérale, de l'eau, une charge inerte chimiquement de particules de résine (VASA) obtenue par polymérisation à partir de monomères de types vinyl aromatique, alkyl acrylate, acrylique, plus ou moins réticulée.

2. Laitier selon la revendication 1, dans lequel les particules de résine ont une masse volumique voisine de 1,03 et une granulométrie inférieure à 100 *µ*m.

3. Laitier selon la revendication 2, dans lequel lesdites particules de résine ont une granulométrie telle que 80% des particules sont comprises entre 0,1 et 100 µm.

4. Laitier selon l'une des revendications précédentes, dans lequel on ajoute un polymère dispersant hydrophile/hydrophobe.

5. Laitier selon la revendication 4, dans lequel ledit polymère à motifs hydrophiles (Hy) et hydrophobes (Hb) en solution aqueuse, les motifs hydrophobes (Hb) contenant des groupement alkyles, aryles, alkyl-aryle C1 à C30, le polymère ayant la structure suivante : ―(Hb)― (Hy)―avec une répartition statistique avec :
- Hy est de la forme : 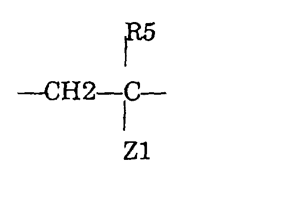 où R5 est H ou CH3, et Z1 est COOH ou CONH2 ou CONHR1SO3 ou CONHR"1, R"1 est CH3 ;
- Hb est de la forme 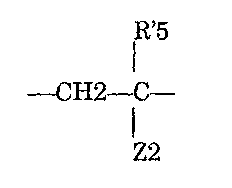
où R'5 est H ou CH3 et Z2 est COOR7, C6H4SO3H, COOR'1, CONR1R'1 ou CONR1R7, R7 étant un tensioactif non ionique constitué d'une chaîne polyoxyéthylènique d'alkyle, R1 est H ou un radical alkyle, aryle ou alkyl-aryle de C1-C30, et R'1 est un radical alkyle, aryle ou alkyl-aryle de C1-C30.

6. Laitier selon la revendication 5, dans lequel le polymère peut avoir une masse moléculaire comprise entre 10¹ et 5 10⁶ daltons et un taux de motifs hydrophobes Hb compris entre 0,5 et 60%.

7. Laitier selon l'une des revendication 5 ou 6, dans lequel le polymère dispersant peut être choisi dans le groupe constitué par :
- HMPAM: où R5 est H et Z1 est CONH2, R'5=CH3, Z2 est COOR'1 avec R'1=C9H19,
- S1: où R5 est H et Z1 est CONH2, R'5=H et Z2 est C6H4SO3H,
- HB1 : où R5 est H, Z1 est COOH, R'5 est H et Z2 est COOR'1 avec R'1 en C4.

8. Laitier selon l'une des revendications précédentes, dans lequel on a la composition suivante :entre 10 et 20% de silice, entre 10 et 15% de micro silice, entre 30 et 60% de résine VASA, entre 0,5 et 5% de polymère hydrophobe, entre 30 et 50% d'eau, les pourcentages étant exprimés par rapport au poids de ciment.

9. Laitier selon la revendication 8, dans lequel on a environ 15% de silice, 12% de micro silice, 50% de résine VASA, entre 1 et 3% de polymère hydrophobe, entre 40 et 45% d'eau.

10. Laitier selon l'une des revendications 1à 3, dans lequel on a la composition suivante :entre 10 et 20% de silice, entre 10 et 15% de micro silice, entre 30 et 60% de résine VASA, entre 80 et 95% d'eau, pas de polymère dispersant.

## Patentansprüche

1. Leichter Zementschlamm, **dadurch gekennzeichnet, dass** er umfasst: Zement, wenigstens eine mineralische Beschickung, Wasser, eine chemisch inerte Beschickung von Harzpartikeln (VASA), erhalten durch Polymerisation aus Monomeren der Typen aromatisches Vinyl, Alkylacrylat, Acryl, mehr oder weniger vernetzt.

2. Schlamm nach Anspruch 1, bei dem die Harzpartikel eine Volumenmasse nahe 1,03 und eine Granulometrie unter 100 µm haben.

3. Schlamm nach Anspruch 2, bei dem die Harzpartikel eine Granulometrie derart haben, dass 80 % der Partikel zwischen 0,1 und 100 µm liegen.

4. Schlamm nach einem der vorhergehenden Ansprüche, bei dem man ein Polymer zugibt, das hydrophil/ hydrophob dispergiert.

5. Schlamm nach Anspruch 4, bei dem das Polymer hydrophile (Hy) und hydrophobe (Hb) Motive in wässriger Lösung hat, wobei die hydrophoben Motive (Hb) Alkyl-, Aryl-, Alkylarylgruppen von C1 bis C30 enthalten, wobei das Polymer die folgende Struktur hat: -(Hb)-(Hy)- mit statistischer Wiederholung mit:
- Hy ist in der Form: 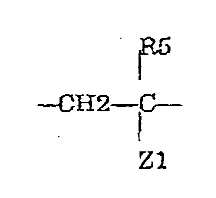 wobei R5 H oder CH3 ist und Z1 COOH oder CONH2 oder CONHR1SO3⁻ oder CONHR"1 ist, R"1 ist CH3;
- Hb ist in der Form 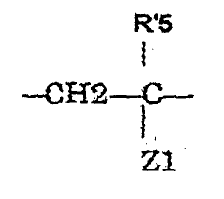
worin R'5 H oder CH3 ist und Z2 COOR7, C6H4SO3H, COOR'1, CONR1R'1 oder CONR1R7 ist, wobei R7 ein tensidaktives nichtionisches Mittel ist, bestehend aus einer Alkylpolyoxyethylenkette, wobei R₁ H oder ein Alkyl-, Aryl- oder Alkylarylrest von C1 - C30 ist und R₁ ein Alkylrest, Arylrest oder Alkylarylrest von C1 - C30 ist.

6. Schlamm nach Anspruch 5, bei dem das Polymer eine Molekularmasse zwischen 10⁴ und 5 ·10⁶ Dalton und einen Anteil an hydrophoben Motiven Hb zwischen 0,5 und 60% haben kann.

7. Schlamm nach einem der Ansprüche 5 oder 6, bei dem das dispergierende Polymer gewählt sein kann aus der Gruppe, die besteht aus:
- HMPAM: worin R5 H ist und Z1 CONH2 ist, R'5 = CH3, Z2 COOR'1 ist mit R'1=C9H19,
- S1: worin R5 H ist und Z1 CONH2 ist, R'5 = H ist und Z2 C6H4SO3H ist,
- HB1: worin R5 H ist, Z1 COOH ist, R'5 H ist und Z2 COOR'1 ist mit R'1 als C4.

8. Schlamm nach einem der vorhergehenden Ansprüche, bei dem man die folgende Zusammensetzung hat: zwischen 10 und 20% Siliziumoxid, zwischen 10 und 15% Microsiliziumoxid, zwischen 30 und 60% VASA-Harz, zwischen 0,5 und 5% hydrophobes Polymer, zwischen 30 und 50% Wasser, wobei die Prozentanteile im Verhältnis zum Zementgewicht ausgedrückt sind.

9. Schlamm nach Anspruch 8, bei dem man etwa 15% Siliziumoxid, 12% Microsiliziumoxid, 50% VASA-Harz, zwischen 1 und 3% hydrophobes Polymer, zwischen 40 und 45% Wasser hat.

10. Schlamm nach einem der Ansprüche 1 bis 3, bei dem man die folgende Zusammensetzung hat: zwischen 10 und 20% Siliziumoxid, zwischen 10 und 15% Microsiliziumoxid, zwischen 30 und 60% VASA-Harz, zwischen 80 und 95% Wasser, kein dispergierendes Polymer.

## Claims

1. Lightweight cement slurry, ***characterised in that*** it comprises cement, at least one mineral filler, water, a chemically inert filler consisting of particles of resin (VASA) which is obtained by polymerisation from monomers of aromatic vinyl, alkyl acrylate and acrylic types with a greater or lesser degree of crosslinking.

2. Slurry according to claim 1, in which the particles of resin have a specific gravity close to 1.03 and a grain size of less than 100 µm.

3. Slurry according to claim 2, in which said particles of resin have a grain size such that 80% of the particles lie between 0.1 and 100 µm.

4. , Slurry according to one of the preceding claims, in which a hydrophilic/hydrophobic dispersing polymer is added.

5. Slurry according to claim 4, in which said polymer has hydrophilic parts (Hy) and hydrophobic parts (Hb) in aqueous solution, the hydrophobic parts (Hb) containing alkyl, aryl, alkyl-aryl C₁-C₃₀ groups, the polymer having the following structure: -(Hb)-(Hy)- with a statistical distribution with:
- Hy with the form: 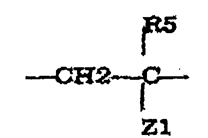 in which R5 is H or CH₃, and Z1 is COOH or CONH₂ or CONHR1SO₃ or CONHR"1, R"1 is CH₃;
- Hb with the form:. 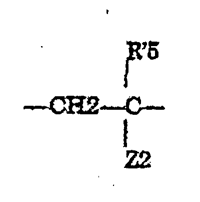
in which R'5 is H or CH₃ and Z2 is COOR7, C₆H₄SO₃H, COOR'1, CONR1R'1 or CONR1R7, R7 being a non-ionic surfactant constituted by an alkyl polyoxyethylene chain, R1 is H or an alkyl, aryl or alkyl-aryl C₁-C₃₀ radical, and R'1 is an alkyl, aryl or alkyl-aryl C₁-C₃₀ radical.

6. Slurry according to claim 5, in which the polymer can have a molecular weight lying between 10¹ and 5 10⁶ Daltons and a level of hydrophobic parts Hb of between 0.5 and 60%.

7. Slurry according to one of claims 5 or 6, in which the dispersing polymer can be selected from the group constituted by:
- HMPAM: in which R5 is H and Z1 is CONH₂, R'5=CH₃, Z2 is COOR'1 with R'1=C₉H₁₉,
- S1: in which R5 is H and Z1 is CONH₂, R'5=H and Z2 is C₆H₄SO₃H,
- HB1: in which R5 is H, Z1 is COOH, R'5 is H and Z2 is COOR'1, with R'1 in C₄.

8. Slurry according to one of the preceding claims, in which the following composition is to be found: between 10 and 20% of silica, between 10 and 15% of micro silica, between 30 and 60% of resin VASA, between 0.5 and 5% of hydrophobic polymer, between 30 and 50% of water, the percentages being expressed in relation to the weight of cement.

9. Slurry according to claim 8, in which there is approximately 15% of silica, 12% of micro silica, 50% of resin VASA, between 1 and 3% of hydrophobic polymer, between 40 and 45% of water.

10. Slurry according to one of claims 1 to 3, in which the following composition is to be found: between 10 and 20% of silica, between 10 and 15% of micro silica, between 30 and 60% of resin VASA, between 80 and 95% of water, with no dispersing polymer.
